# EUROPEAN PATENT APPLICATION

(11) **EP 4 763 290 A2**
(43) Date of publication of application: **24.06.2026**
(21) Application number: 26168002.9
(22) Date of filing: 07.02.2023
(51) Int. Cl.: A62C 3/16

(54) **BATTERY PACK AND DEVICE INCLUDING THE SAME**

(30) Priority: 17.02.2022 KR 20220020767
(62) Divisional of application: 23756558.5
(71) Applicant: LG ENERGY SOLUTION, LTD., Seoul 07335 (KR)
(72) Inventor: JEONG, Ji Won, 34122 DAEJEON (KR); YU, Sanghyun, 34122 DAEJEON (KR); CHO, Young Bum, 34122 DAEJEON (KR); YOON, Han Ki, 34122 DAEJEON (KR); KU, Wonhoe, 34122 DAEJEON (KR); NAMGOUNG, Hyeok, 34122 DAEJEON (KR)
(74) Representative: Plasseraud IP

(57) **Abstract**

A battery pack according to one embodiment of the present disclosure includes a battery cell stack in which a plurality of battery cells are stacked, a pack frame that houses the battery cell stack, a cooling member that is located on an upper side of the battery cell stack and contains a coolant water, and a foam pad that is located between the battery cell stack and the cooling member, wherein at least one fragile part that breaks or melts at a predetermined temperature or pressure or higher is formed on a lower plate of the cooling member, and wherein the fragile part of the cooling member is opened, so that the moving path of the coolant water discharged toward the battery cell stack is guided by the foam pad.

## Description

### [TECHNICAL FIELD]

### Cross Citation with Related Application(s)

This application claims the benefit of Korean Patent Application No. 10-2022-0020767 filed on February 17, 2022 with the Korean Intellectual Property Office, the entire contents of which are incorporated herein by reference.

The present disclosure relates to a battery pack and a device including the same, and more particularly, to a battery pack that prevents cascading thermal runaway and a device including the **same .**

### [BACKGROUND]

In modern society, as portable devices such as a mobile phone, a notebook computer, a camcorder and a digital camera has been daily used, the development of technologies in the fields related to mobile devices as described above has been activated. In addition, chargeable/dischargeable secondary batteries are used as a power source for an electric vehicle (EV), a hybrid electric vehicle (HEV), a plug-in hybrid electric vehicle (P-HEV) and the like, in an attempt to solve air pollution and the like caused by existing gasoline vehicles using fossil fuel. Therefore, the demand for development of the secondary battery is growing.

Currently commercialized secondary batteries include a nickel cadmium battery, a nickel hydrogen battery, a nickel zinc battery, and a lithium secondary battery. Among them, the lithium secondary battery has come into the spotlight because it has advantages, for example, being freely charged and discharged, and having very low self-discharge rate and high energy density.

Meanwhile, in the case of a secondary battery used for small-sized devices, two to three battery cells are used, but in the case of a secondary battery used for a medium- and large-sized device such as automobiles, a medium- or large-sized battery module in which a large number of battery cells are electrically connected is used. Since the medium- or large-sized battery module is preferably manufactured with as small a size and weight as possible, a prismatic battery, a pouch-type battery, or the like, which can be stacked with high integration and has a small weight relative to capacity, is mainly used as a battery cell of the medium- or large-sized battery module.

Meanwhile, battery cells mounted in battery module can generate a large amount of heat in a charge and discharge process. If the temperature becomes higher than the proper temperature due to reasons such as overcharging, performance may deteriorate, and if the temperature rise is excessive, there may be a risk of an explosion or ignition. If an ignition phenomenon occurs inside the battery module, high-temperature heat, gas, or flame may be emitted to the outside of the battery module, wherein the heat, gas, spark, flame or the like emitted from one battery module may be transmitted to other adjacent battery modules at a narrow interval within the battery pack, which can lead to cascading thermal runaway within the battery pack.

In recent years, in order to prevent such a thermal runaway phenomenon, a method has been developed for suppressing a fire by injecting coolant water into the battery pack when a fire occurs. However, if the injected coolant water is not concentrated to the occurrence position of thermal runaway, there is a problem that the fire suppressing effect is slightly reduced relative to the amount of coolant water injected.

Therefore, there is a need for a new structure that can quickly suppress the thermal runaway by injecting coolant water into the right place at the right time when ignition occurs inside the battery module or battery pack, and can efficiently utilize the injected cooling water.

### [DETAILED DESCRIPTION OF THE INVENTION]

### [Technical Problem]

It is an object of the present disclosure to provide a battery pack which can supply a coolant water into the right place at the right time in the event of an internal fire and allows the injected coolant water to concentrate on the periphery of the fire outbreak area, thereby preventing cascading thermal runaway.

However, the problem to be solved by embodiments of the present disclosure is not limited to the above-described problems, and can be variously expanded within the scope of the technical idea included in the present disclosure.

### [Technical Solution]

According to one embodiment of the present disclosure, there is provided a battery pack comprising: a battery cell stack in which a plurality of battery cells are stacked, a pack frame that houses the battery cell stack, a cooling member that is located on an upper side of the battery cell stack and contains a coolant water, and a foam pad that is located between the battery cell stack and the cooling member, wherein at least one fragile part that breaks or melts at a predetermined temperature or pressure or higher is formed on a lower plate of the cooling member, and wherein the fragile part of the cooling member is opened, so that the moving path of the coolant water discharged toward the battery cell stack is guided by the foam pad.

The foam pad comprises at least one opening, and the opening of the foam pad may correspond to the fragile part.

A part of the coolant water discharged toward the battery cell stack may be absorbed by the foam pad.

The battery cell stack is formed in a plurality of numbers, and the foam pads may correspond to all of the battery cell stacks.

A plurality of openings are formed in the lower plate, with the opening being closed by a sealing member, and the fragile part may be a portion where the opening closed by the sealing member in the lower plate is located.

The cooling member comprises a cooling tube that provides a flow path for coolant water and a cooling hose attached to the cooling tube, the lower plate is formed with a plurality of openings, with the cooling hose being located so as to correspond to the opening, and the fragile part may be a portion where the opening closed by the cooling hose in the lower plate is located.

The lower plate and the cooling tube may be connected by a strap-shaped fixing member.

The lower plate comprises a first part where the fragile part is formed and a second part where the fragile part is not formed, and a thickness value of the first part may be smaller than a thickness value of the second part.

The thickness value of the first part may be less than or equal to half of the thickness value of the second part.

The lower plate is formed by joining a first layer and a second layer having different thicknesses from each other, the thickness of the first part corresponds to the thickness of the first layer, and the thickness of the second part may correspond to the thickness of the first layer and the second layer.

The upper plate coupled to the lower plate of the cooling member comprises a bent part, a crest of the bent part corresponds to the first part, and a trough of the bent part may correspond to the second part.

The cooling member further comprises an in-out port for injecting coolant water into an inner space of the cooling member, the in-out port is connected to an external heat exchanger, and the coolant water of the cooling member may circulate through the in-out port.

The upper plate of the cooling member may be an upper surface of the pack frame.

According to another embodiment of the present disclosure, there is provided a device comprising the above-mentioned battery pack.

### [Advantageous Effects]

According to some embodiments, coolant water can be injected toward the battery cells in which thermal runaway has occurred from the cooling member inside the battery pack, and the coolant water injected by the foam pad can be concentrated on the periphery of the fire outbreak area, thereby quickly suppressing internal fire, and preventing cascading thermal runaway.

The effects of the present disclosure are not limited to the effects mentioned above and additional other effects not described above will be clearly understood from the detailed description and the appended drawings by those skilled in the art.

### [BRIEF DESCRIPTION OF THE DRAWINGS]

FIGS. 1 and 2 are exploded perspective views of a battery pack according to one embodiment of the present disclosure;
FIG. 3 is a perspective view of a cell block included in the battery pack according to FIG. 1;
FIG. 4 is a diagram showing a lower plate of a cooling member included in the battery pack according to FIG. 1;
FIGS. 5 and 6 are diagrams for explaining changes in a cooling member and a foam pad before and after thermal runaway;
FIG. 7 is a diagram for explaining a change after thermal runaway when a foam pad is not provided to the battery pack of FIG. 1;
FIG. 8 is a perspective view showing a cooling member included in a battery pack according to another embodiment of the present disclosure;
FIG. 9 is a diagram showing a coupling between a lower plate and a cover film included in the cooling member according to FIG. 8;
FIG. 10 is a perspective view showing a lower plate of a cooling member included in a battery pack according to another embodiment of the present disclosure;
FIG. 11 is a diagram showing examples of the cross section taken along the cutting line A-A of FIG. 10;
FIG. 12 is a cross-sectional view of a lower plate for explaining a modified embodiment of the cooling member according to FIG. 10;
FIG. 13 is a cross-sectional view of a lower plate for explaining another modified embodiment of the cooling member according to FIG. 10;
FIG. 14 is a cross-sectional view of a cooling member for explaining yet another modified embodiment of the cooling member according to FIG. 10;
FIG. 15 is a perspective view showing a cooling member included in a battery pack according to yet another embodiment of the present disclosure;
FIG. 16 is a top view of the cooling member included in a battery pack according to yet another embodiment of the present disclosure;
FIG. 17 is a diagram showing the coupling of the lower plate, the cooling tube, and the cooling hose included in the cooling member according to FIG. 15;
FIG. 18 shows the cooling member according to FIG. 16 cut along the line B-B, and shows the inflow of coolant water into the cooling tube and the cooling hose, and the outflow therefrom; and
FIG. 19 is a cross-sectional view of the cooling member of FIG. 16 taken along line B-B, which shows the injection of coolant water by a cooling hose during ignition of a battery cell.

### [DETAILED DESCRIPTION OF THE EMBODIMENTS]

Hereinafter, an exemplary embodiment will be described in detail with reference to the accompanying drawings such that the described technology can be easily put into practice by those skilled in the art. However, the described embodiments can be modified in various different ways other than those described below, without being limited or restricted to the embodiments described herein.

Parts that are irrelevant to the description will be omitted to more clearly describe the invention, and the same or similar constituent elements will be designated by the same reference numerals throughout the specification.

Further, since the size and thickness of each element shown in the accompanying drawing are arbitrarily illustrated for convenience of explanation, it would be obvious that the present disclosure is not necessarily limited to those illustrated in the drawings. In the drawings, the thickness of layers are exaggerated for clearly expressing several layers and regions. In the drawings, for convenience of explanation, the thicknesses of a part and a region are exaggerated.

In addition, it will be understood that when an element such as a layer, film, region, or plate is referred to as being "on" or "above" another element, it can be directly on the other element or intervening elements may also be present. On the contrary, when an element such as a layer, film, region, or plate is referred to as being formed or disposed "directly on" another element, it means that other intervening elements are not present. Further, the word "on" or "above" means arranged on or above a reference portion, and does not necessarily mean being arranged on the upper end of the reference portion toward the opposite direction of gravity. Meanwhile, similarly to the case where it is described as being located "on" or "above" another element, the case where it is described as being located "below" or "under" another element will also be understood with reference to the above-mentioned contents.

Further, since the upper/lower surface of a specific member can be determined differently depending on which direction is used as a reference, throughout the description, 'upper surface' or 'lower surface' is defined as meaning two facing surfaces on the z-axis of the corresponding member.

Further, throughout the description, when a portion is referred to as "including" or "comprising" a certain component, it means that the portion can further include other components, without excluding the other components, unless otherwise stated.

Further, throughout the description, when it is referred to as "planar", it means that a target portion is viewed from the upper side, and when it is referred to as "cross-sectional", it means that a target portion is viewed from the side of a cross section cut vertically.

Hereinafter, a battery pack according to one embodiment of the present will be described.

Typically, conventional battery packs have a double assembly structure in which a battery cell stack and various parts connected thereto are assembled to form a battery module, and a plurality of battery modules are again housed in the battery pack.

At this time, the battery module includes a module frame or the like that forms the outer surface thereof, so that the conventional battery cells are doubly protected by a module frame of a battery module and a pack frame of a battery pack. However, such a double assembly structure not only increases the production cost and production process of the battery pack, but also has a disadvantage that reassembly performance is deteriorated when defects occur in some battery cells. Moreover, if the cooling member or the like exists outside the battery module, there is a problem that the heat transfer path between the battery cell and the cooling member becomes slightly complicated.

Therefore, the battery cell stack of the present embodiment can be provided in a structure that is not sealed by the module frame, and can be directly coupled to the pack frame of the battery pack. Through the configuration above, the structure of the battery pack can be further simplified, advantages in terms of the production cost and production process can be obtained, and weight reduction of the battery pack can be achieved. Further, through the configuration above, the battery cell stack can be located closer to the cooling member in the pack frame, and heat dissipation by the cooling member can be more easily achieved.

Therefore, since the 'battery pack' described below is a structure that includes a battery cell stack and a frame housing it, it is not limited to including a sealed battery module like a conventional one, and may broadly refer to a structure in which a battery cell stack and several parts connected thereto are assembled. From this point of view, the battery pack of this embodiment may be referred to as a battery module as needed.

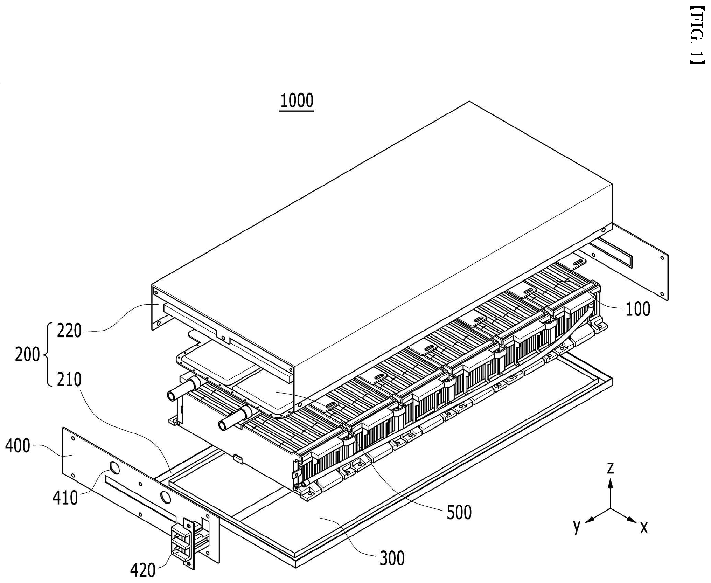

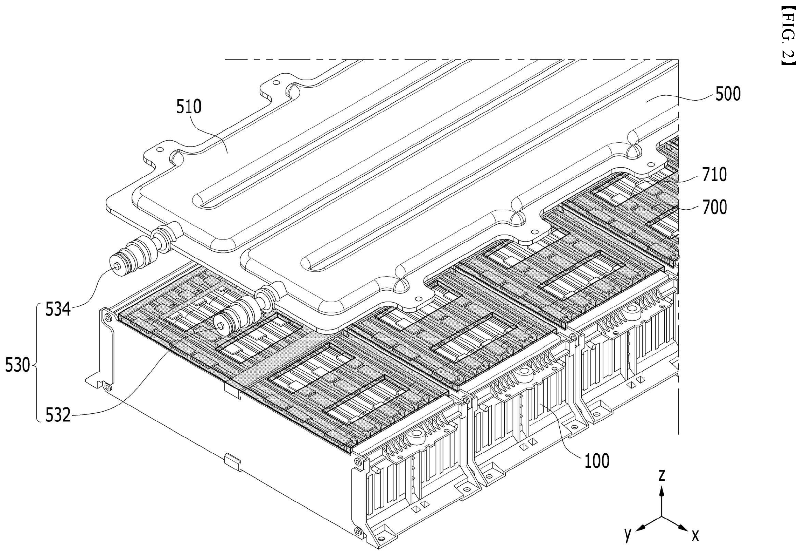

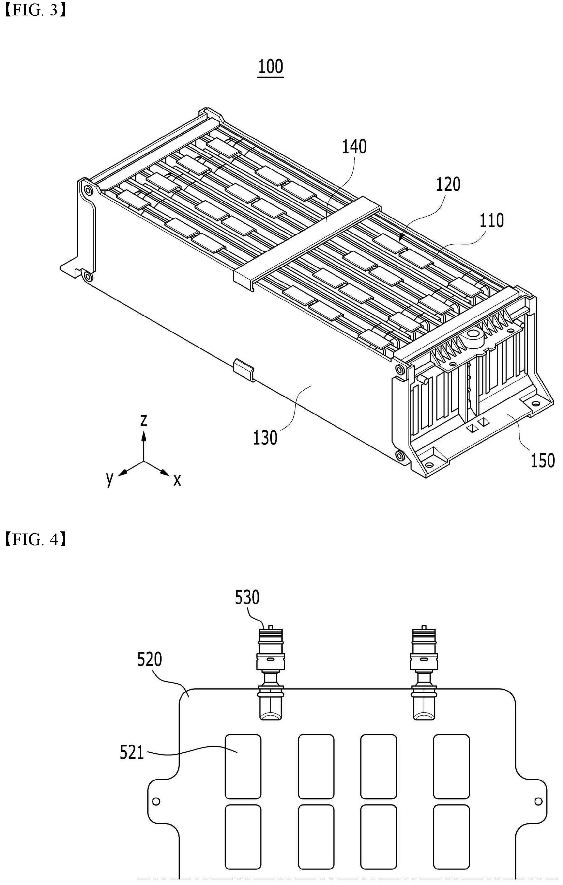

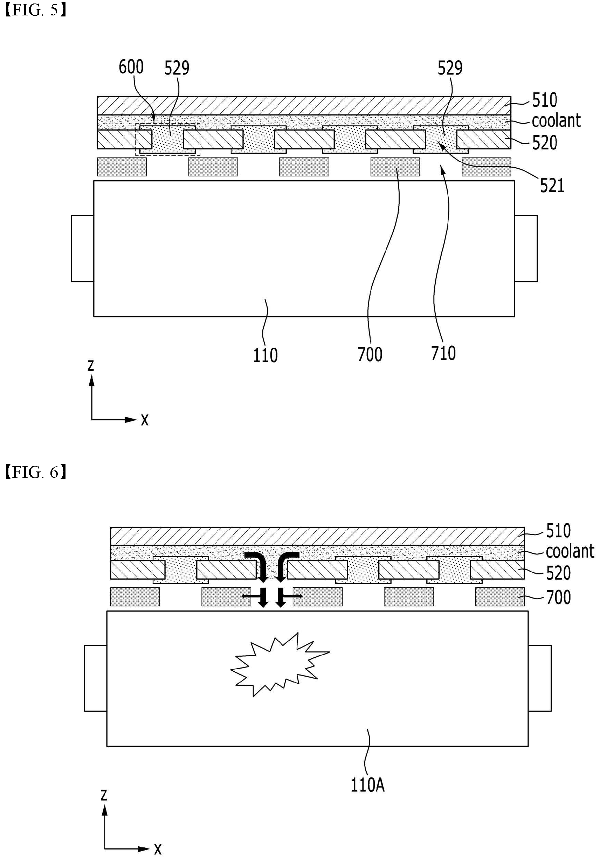

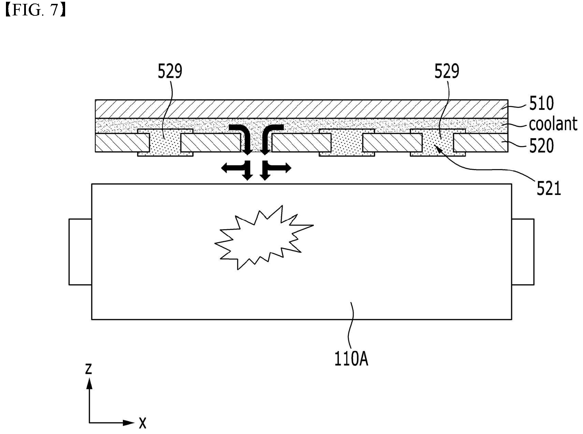

FIGS. 1 and 2 are exploded perspective views of a battery pack according to one embodiment of the present disclosure. FIG. 3 is a perspective view of a cell block included in the battery pack according to FIG. 1. FIG. 4 is a diagram showing a lower plate of a cooling member included in the battery pack according to FIG. 1. FIGS. 5 and 6 are diagrams for explaining changes in a cooling member and a foam pad before and after thermal runaway. FIG. 7 is a diagram for explaining a change after thermal runaway when a foam pad is not provided to the battery pack of FIG. 1.

Referring to FIGS. 1 to 3, the battery pack 1000 according to one embodiment of the present disclosure may include at least one cell block 100, a pack frame 200 that houses the cell block 100, a resin layer 300 formed on the inner surface of the pack frame 200, an end plate 400 that closes the opened surface of the pack frame 200, a cooling member 500 arranged between the pack frame 200 and the cell block 100, and a foam pad 700 located between the cooling member 500 and the cell block 100. However, the components included in the battery pack 1000 are not limited thereto, and depending on the design, the battery pack 1000 may be provided in such a state that some of the above components are omitted, and may be provided in such a state that other components not mentioned are added.

The battery pack 1000 according to the present embodiment may include the cell block 100 that is not sealed by a frame or the like. The cell block 100 may have a structure similar to a conventional battery module in which a module frame is omitted, and thus may also be referred to as a battery module having 'opened structure' or a battery module having 'module-less structure'.

The cell block 100 may include a battery cell stack 120 in which a plurality of battery cells 110 are stacked along one direction, side face plates 130 located at both ends in the stacking direction of the battery cell stack 120, a holding strap 140 that wraps around the side face plates 130 and the battery cell stack 120 and fix the shape, and busbar frames 150 that cover the front surface and the rear surface of the battery cell stack 120.

Each battery cell 110 may each include an electrode assembly, a cell case, and an electrode lead that protrudes from the electrode assembly. The battery cell 110 may be provided in a pouch type or prismatic type that can maximize the number of stacks per unit area. Meanwhile, FIGS. 1 to 3 show that the positive electrode lead and the negative electrode lead of the battery cell 110 protrude in mutually opposite directions, but this is not necessarily the case, and the electrode leads of the battery cell 110 can also protrude in the same direction.

The battery cell stack 120 may be formed by stacking a plurality of electrically connected battery cells 110 along one direction. The direction in which the plurality of battery cells 110 are stacked (hereinafter referred to as 'stacking direction') may be the y-axis direction as shown in FIGS. 1 to 3 (alternatively, it may be the -y axis direction, and hereinafter, the expression 'axis direction' can be interpreted as including both +/- directions).

Meanwhile, the battery cells 110 are arranged along one direction, so that the electrode leads of the battery cells 110 can be located on one surface of the battery cell stack 120, or on the other surface opposite to the one surface. In this manner, the surface on which the electrode leads are located in the battery cell stack 120 may be referred to as the front surface or the rear surface of the battery cell stack 120, and in FIGS. 1 to 3, the front surface and the rear surface of the battery cell stack 120 are shown as two surfaces facing each other on the x-axis. Further, the surface on which the outermost battery cell 110 is located in the battery cell stack 120 may be referred to as the side surface of the battery cell stack 120, and the side surface of the battery cell stack 120 is shown as two surfaces facing each other on the y-axis.

The side face plate 130 may be provided to maintain the overall shape of the battery cell stack 120. The side face plate 130 is a plate-shaped member, and can complement the stiffness of the cell block 100 instead of the module frame. The side face plates 130 may be arranged at both ends of the battery cell stack 120 in the stacking direction, and can make contact with the outermost battery cells 110 on both sides of the battery cell stack 120.

The side face plate 130 may be made of various materials and may be provided through various production methods. In one example, the side face plate 130 may be a plastic material produced by injection molding. In another example, the side face plate 130 may be produced from a leaf spring material. In yet another example, the side face plate 130 may be made from a material having elasticity that allows its shape to partially deform in response to the volume change of the battery cell stack 120 due to swelling.

The holding strap 140 may be for fixing the position and shape of the side face plates 130 at both side ends of the battery cell stack 120. The holding strap 140 may be a member having a length and a width. Specifically, the battery cell stack 120 may be located between the two side face plates 130 that make contact with the outermost battery cell 110, and the holding strap 140 may cross the battery cell stack 120 and connect the two side face plates 130. Thereby, the holding strap 140 can prevent the distance between the two side plates 130 from increasing beyond a certain range, thereby maintaining the overall shape of the cell block 100 within a certain range.

The holding strap 140 may have hooks at both ends in the longitudinal direction for stable coupling with the side face plate 130. The hooks may be formed by bending both ends of the holding strap 140 in the longitudinal direction. Meanwhile, the side face plate 130 may be formed with a hooking groove at a position corresponding to the hooks, and the holding strap 140 and the side face plate 130 can be stably coupled through the coupling of the hook and the hooking groove.

The holding strap 140 may be provided with various materials or through various production methods. In one example, the holding strap 140 can be made from a material having elasticity, so that the volumetric change of the battery cell stack 120 due to swelling can be permitted within a certain range.

Meanwhile, the holding strap 140 is for fixing the relative position between the side face plate 130 and the battery cell stack 120, and if its purpose as a 'fixing member' is achieved, it can be provided in a configuration different from those shown. For example, the fixing member may be provided in the form of a long bolt that can cross between the two side face plates 130, that is, a long bolt. The side face plate 130 may be provided with a groove into which a long bolt can be inserted, and the long bolt can fix the relative positions of the two side plates 130 by simultaneously coupling the two side plates 130 through the groove. The long bolt may be provided at an edge of the side face plate 130, preferably at a position close to a vertex of the side face plate 130. Depending on the design, it would be possible to replace the holding strap 140 with the above-mentioned long bolt, but it would also be possible to provide both the holding strap 140 and the long bolt in the cell block.

The busbar frame 150 is located on one surface of the battery cell stack 120, so that it can cover one surface of the battery cell stack 120, and simultaneously guide a connection between the battery cell stack 120 and an external device. The busbar frame 150 may be located on the front surface or the rear surface of the battery cell stack 120. A busbar may be mounted to the busbar frame 150, whereby the electrode leads of the battery cell stack 120 can be connected to the busbar, so that the battery cell stack 120 can be electrically connected to an external device.

The busbar frame 150 may include an electrically insulating material. The busbar frame 150 can limit the contact of the busbar with other parts of the battery cells 110 other than the parts joined to the electrode leads, and prevent an electrical short circuit from occurring.

The pack frame 200 can be for protecting the cell block 100 and electrical components connected thereto from external physical impacts. The pack frame 200 may house the cell block 100 and electrical components connected thereto in the inner space of the pack frame 200. Here, the pack frame 200 includes an inner surface and an outer surface, and the inner space of the pack frame 200 may be defined by the inner surface.

The pack frame 200 can be provided in a hollow shape that is opened along one direction. For example, as shown in FIG. 1, a plurality of cell blocks 100 are continuously located along the stacking direction of the battery cells 110, and the pack frame 200 can have a hollow shape that is opened along the above-mentioned stacking direction.

The pack frame 200 may include a lower frame 210 and an upper frame 220. Here, the lower frame 210 may be provided in a plate shape, and the upper frame 220 may be provided in a U-shape. At least one cell block 100 may be arranged on the plate-shaped lower frame 210, and a U-shaped upper frame 220 may be provided so as to surround the upper surface of the cell block 100 and two surfaces on the x-axis. Further, any one of the upper frame 220 and the lower frame 210 may be formed so as to surround two surfaces on the y-axis of the battery pack 1000. In such a case, the end plate 400 may be omitted. However, the shape of the pack frame 200 shown in FIG. 1 is for illustrative purposes only, and thus can also be provided in a shape different those described above, such as the pack frame 200 being provided as a mono frame, or the lower frame 210 being provided as a U-shape, and the upper frame 220 being provided in a plate shape.

The pack frame 200 may include a portion having high thermal conductivity in order to rapidly dissipate heat generated in the internal space to the outside. For example, at least a part of the pack frame 200 can made from a metal having high thermal conductivity, and examples thereof may include aluminum, gold, silver, copper, platinum, an alloy containing the same, or the like. Further, the pack frame 200 may partially have an electrical insulation property, and an insulating film may be provided at a position requiring insulation, or an insulating coating may be applied. A portion to which an insulating film or an insulating coating in the pack frame 200 is applied may be referred to as an insulating portion.

A resin layer 300 may be provided between the cell block 100 and the inner surface of the pack frame 200. The resin layer 300 may be provided between the bottom surface of the cell block 100 and the lower frame 210. The resin layer 300 may be provided between the upper surface of the cell block 100 and the upper frame 220. Further, the resin layer 300 may be provided between the cooling member 500 and the upper frame 220, which will be described later.

The resin layer 300 may be formed in such a manner that a resin is injected between the battery cell stack 120 and one side surface of the inner surfaces of the pack frame 200. However, this is not necessarily the case, and the resin layer 300 may be a member provided in a plate shape.

The resin layer 300 may be made from various materials, and functions of the resin layer 300 may vary depending on the material. For example, the resin layer 300 may be formed from an insulating material, and electron transfer between the cell block 100 and the pack frame 200 can be prevented through the insulating resin layer 300. In another example, the resin layer 300 may be formed of a thermally conductive material. The resin layer 300 made from a thermally conductive material transfers the heat generated in the battery cell 110 to the pack frame 200, thereby allowing the heat to be emitted/transferred to the outside. In yet another example, the resin layer 300 may include an adhesive material, so that the cell block 100 and the pack frame 200 can be fixed to each other. In a specific example, the resin layer 300 may be provided so as to include at least one of a silicone-based material, a urethane-based material, and an acrylic-based material.

The end plate 400 can be for protecting the cell block 100 and electrical components connected thereto from external physical impacts by sealing the opened surface of the pack frame 200. Each corner of the end plate 400 can be coupled to a corresponding corner of the pack frame 200 by welding or the like. Two end plates 400 can be provided so as to seal the two opened surfaces of the pack frame 200, and can be made from a metal material having a predetermined strength.

The end plate 400 can be formed with an opening 410 for exposing an inlet/outlet port 530 of the cooling member 500, which will be described later, to which a connector 420 for low voltage (LV) connection or high voltage (HV) connection with an external device can be mounted.

The cooling member 500 may be provided to lower the internal temperature of a battery module or battery pack including battery cells. The cooling member 500 may be a water-cooled type cooling member 500 into which refrigerant or coolant water is injected. The cooling member 500 is provided in a water-cooled manner, so that the cooling efficiency of the cooling member 500 can be maintained uniformly, and the battery cells in the battery module or battery pack can be evenly cooled. At this time, the coolant water used in the cooling member 500 may use one of known ones or a mixture thereof. Any known one can be used as long as it can dissipate heat of the battery cells by moving along the flow path inside the cooling member 500.

The cooling member 500 may be arranged on one surface of the battery cell stack to dissipate heat from the battery cells. The cooling member 500 can be arranged in parallel to the stacking direction of the battery cell stack so as to be located close to the plurality of battery cells of the battery cell stack. Specifically, the cooling member 500 may be located above the battery cell stack (+z-axis direction in FIG. 1). However, this is not necessarily the case, and depending on the design, the cooling member 500 may be located at the lower part (-z-axis direction) or at the side part (+/-y-axis direction) of the battery cell stack.

The cooling member 500 may include an upper plate 510 and a lower plate 520 that form the outer shape of the cooling member 500, and an inlet/outlet port 530 that injects coolant water into the cooling member 500. The cooling member 500 can be formed by coupling edges of the upper plate 510 and the lower plate 520. Coolant water may be incorporated or circulated between the upper plate 510 and the lower plate 520 coupled in the cooling member 500.

The upper plate 510 and the lower plate 520 may be provided in a plate shape. Further, the upper plate 510 or the lower plate 520 is provided in a plate shape, wherein the central portion may be formed so to be depressed or recessed to have a step with the edge portion. Specifically, the upper plate 510 or the lower plate 520 may have a recessed shape based on a cross section in the width direction. This may be a shape in which an internal space is formed through a step in order for the upper plate 510 or the lower plate 520 to house the coolant water. Here, the width direction of the upper plate 510 or the lower plate 520 may be in a direction parallel to the short side of the upper plate 510 or the lower plate 520.

In order to improve overall heat dissipation performance of the cooling member 500, the upper plate 510 or the lower plate 520 of the cooling member 500 may be provided with a material having high thermal conductivity. The upper plate 510 and the lower plate 520 forming the outer shape of the cooling member 500 may be made from a metal having high stiffness, and specific examples thereof include aluminum, gold, silver, copper, platinum, alloys containing the same, or the like.

Meanwhile, in the drawings herein, the upper plate 510 is shown in a separate configuration from the pack frame 200, but in order to reduce the weight of the battery pack 1000 or improve the thermal conductivity, the upper plate 510 may be replaced with the upper surface of the pack frame 200, and the cooling member 500 may be provided in a structure integrated with the pack frame 200.

Coolant water may be supplied through the inlet port 532 and discharged through the outlet port 534, the inlet port 532 and outlet port 534 being located side by side. The coolant water in the cooling member 500 may be designed to be connected to an external heat exchanger connected with the inlet/outlet port 530 and continuously circulated to maintain its temperature homeostasis. The inlet port 532 and the outlet port 534 may be located in parallel side by side at one end side of the cooling member 500. This may be for simplifying the design of the inflow and outflow of coolant water supplied from the outside of the battery pack 1000. Further, this may be for minimizing a temperature difference between the inlet port 532 and the outlet port 534. Specifically, the coolant water flowing into the inlet port 532 has the lowest temperature, and the coolant water discharged to the outlet port 534 may have the highest temperature. Therefore, when the inlet/outlet ports 530 are arranged adjacent to each other, heat exchange occurs between them, so that a temperature deviation of the entire cooling water flowing through the inner space of the cooling member can be minimized. Thus, the inlet/outlet ports 530 are arranged side by side, so that the cooling member 500 can have uniform heat dissipation performance as a whole.

Meanwhile, at least one fragile part 600 may be formed in the cooling member 500 of the present embodiment.

In order to effectively suppress the ignition of a battery cell, it may be effective to inject a liquid such as coolant water into the battery module or battery pack. Providing a liquid tank inside the battery module or battery pack may cause a problem of increasing the volume of the battery module and the battery pack. Thus, conventionally, a separate water tank was provided outside the battery module and the battery pack, and coolant water or the like was injected into the battery module or the battery pack through a nozzle or the like extending from the water tank only when ignition of the battery cell was confirmed through a sensor.

However, the water tank has a problem that not only its volume is large, but also the user has to manage it separately. In addition, the conventional water supply system must have a separate control unit or communication unit for determining whether to inject coolant water, should not cause errors in their operation, and must go through a number of determination processes even if they operate normally, which thus took a lot of time. Even after the decision to inject coolant water has been made, if the path from the water tank to the battery module or the battery cell inside the battery pack is rather long, it is difficult to quickly supply the coolant water from the water tank to the battery cell, and it has been difficult for the conventional water injection system to suppress cascading thermal runaway that progresses rapidly. Therefore, in the present embodiment, a fragile part 600 that melts or breaks at a predetermined temperature or pressure may be formed in the cooling member 500 so that coolant water can be immediately supplied to the fire outbreak place when an internal fire occurs in a battery module or battery pack.

The fragile part 600 may refer to a portion that melts or breaks at a predetermined temperature or pressure. The fragile part 600 is opened during internal ignition of the battery pack 1000, and thus, configured so as to immediately supply coolant water to the fire outbreak place, and can be provided in various structures.

For example, referring to FIGS. 4 to 6, the lower plate 520 may include at least one opening 521, wherein the opening 521 may be sealed with a sealing member 529. The sealing member 529 can seal the opening 521 before thermal runaway, thereby preventing the outflow of cooling water, and it melts or breaks after thermal runaway, so that the coolant water in the cooling member 500 can be injected toward the battery cell 110.

In the present embodiment, the fragile part 600 may refer to a portion where the opening 521 is located in the lower plate 520. The fragile part 600 may refer to a portion where the sealing member 529 is located in the lower plate 520. The fragile part 600 may refer to a portion where an opening 521 sealed by a sealing member 529 is formed in the lower plate 520.

The sealing member 529 may be made from a material that melts or breaks at a predetermined temperature or pressure. For example, the sealing member 529 may be made from a material having a melting point of 300°C or less. In a specific example, the sealing member 529 may be made so as to include polyamide (PA). In another specific example, the sealing member 529 may be made from a thermoplastic polymer resin having a melting point of 200°C or less. Examples of the thermoplastic polymer resin include materials having a melting point of about 100°C or more and 200°C or less, such as high-density polyethylene (HDPE), polyethylene (PE), polypropylene (PP), and polyphenylene oxide (PPO).

The sealing member 529 may be provided in an I-shape. At least a part of both ends of the sealing member 529 may make surface contact with the upper surface and the lower surface of the lower plate 520, whereby coupling between the sealing member 529 and the lower plate 520 can be easily achieved. Depending on the design, embossed or engraved protrusions or grooves may be formed on contact surfaces where the sealing member 529 and the upper and lower surfaces of the lower plate 520 contact each other. As the protrusion or groove formed on the sealing member 529 and the groove or protrusion formed on the lower plate 520 can be engaged with each other, thereby more effectively preventing the sealing member 529 from coming off due to the pressure of the cooling water.

Meanwhile, even if coolant water is discharged from the cooling member 500 toward the battery cell 110 due to the opening of the fragile part 600, it may be difficult to rapidly suppress the fire unless the coolant water is concentrated on the periphery of the fire outbreak area. Accordingly, the battery pack 1000 of the present embodiment may include a foam pad 700 that allows cooling water to concentrate on the periphery of the fire outbreak area.

The foam pad 700 may be located between the cooling member 500 and the cell block 100. The foam pad 700 may be located between the cooling member 500 and the battery cell stack 120.

The foam pad 700 may be for guiding a flow of coolant water discharged from the cooling member 500 when the fragile part 600 is opened. As shown in FIG. 6, when thermal runaway occurs in the first battery cell 110A, only the fragile part 600 around the position where the thermal runaway occurs can be opened, and coolant water discharged through the opened fragile part 600 may be restricted in flow by the foam pad 700 and concentrated into the first battery cell 110A. However, when the foam pad 700 does not exist as shown in FIG. 7, the coolant water may spread widely over the upper surface of the battery cell stack 120, which may make it difficult to supply a sufficient amount of coolant water to the first battery cell 110A.

The foam pad 700 may include at least one pad opening 710. The pad opening 710 may correspond to the fragile part 600 of the cooling member 500. The pad opening 710 corresponds to the fragile part 600, so that coolant water discharged from the fragile part 600 can be intensively injected into the first battery cell 110A without interference from the foam pad 700.

The foam pad 700 may be for absorbing a part of the coolant water discharged from the cooling member 500. The foam pad 700 may be provided so as to include a plurality of pores, and may absorb fluid through the pores. When the coolant water discharged from the cooling member 500 is absorbed by the foam pad 700, moisture may remain around the first battery cell 110A, which can quickly achieve extinguishment of the first battery cell 110A. In addition, moisture can remain on the upper part of the first battery cell 110A, thereby minimizing emission of particles or gases that may be induced from the first battery cell 110A.

The foam pad 700 may correspond to the battery cell stack 120 included in the battery pack 1000. When the battery cell stacks 120 included in the battery pack 1000 are formed in a plurality of numbers, the foam pad 700 may correspond to the plurality of battery cell stacks 120. At this time, a plurality of the foam pads 700 may be provided so as to correspond to each of the battery cell stacks 120, or a single foam pad may be provided so as to correspond to the plurality of battery cell stacks 120.

Next, a battery pack according to another embodiment of the present disclosure will be described.

The battery pack of the embodiment described below is the same as the contents of the embodiments described above, except that the structure of the cooling member is different. Therefore, in describing the present embodiment, the same reference numerals designate the components common to those of the above-described embodiment, and thus their detailed descriptions are omitted.

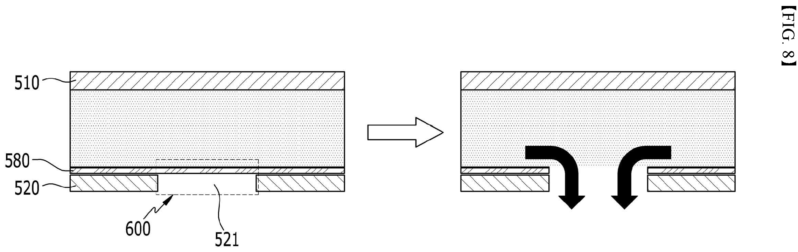

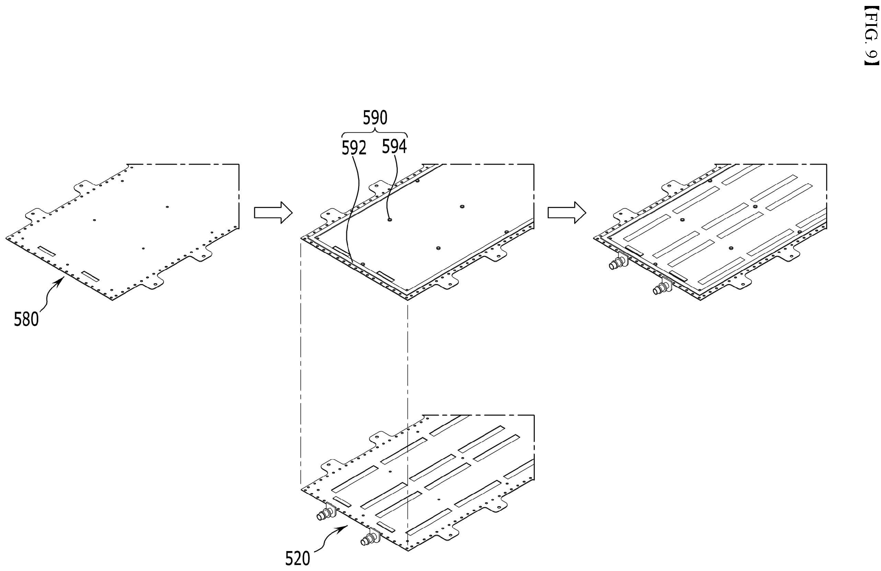

FIG. 8 is a diagram showing a cross section of a cooling member included in a battery pack according to another embodiment of the present disclosure. FIG. 9 is a diagram showing a coupling between a lower plate and a cover film included in the cooling member according to FIG. 8.

Referring to FIGS. 8 and 9, the cooling member 500 of the present embodiment may include a cover film 580. The cover film 580 may be configured to close the opening 521 of the lower plate 520 before ignition of the battery cell 110 and open the opening 521 during ignition of the battery cell 110. When the cover film 580 breaks due to the temperature and pressure associated with the ignition of the battery cell, the coolant water inside the cooling member 500 is injected toward the battery cell, so that fires can be suppressed.

In this embodiment, the fragile part 600 may refer to a portion where the opening 521 is located in the lower plate 520. The fragile part 600 may refer to a portion where the opening 521 closed by the cover film 580 is formed in the lower plate 520.

The cover film 580 can be made from a material that melts or breaks at a predetermined temperature or pressure. The cover film 580 may be made from the same or similar material as the sealing member 529 of the embodiments described above.

The cover film 580 may be arranged between the upper plate 510 and the lower plate 520, and located so as to cover the lower plate 520. The cover film 580 may be attached to the lower plate 520. The outline shape of the cover film 580 may be similar or identical to the outline shape of the lower plate 520 as a whole. A specific shape of the cover film 580 may be similar or identical to that of the lower plate 520 except for the opening 521.

The cover film 580 preferably has a predetermined thickness or larger so as to withstand the gravity caused by the weight of the coolant water and the frictional force accompanied with the flow of the coolant water. However, if the cover film 580 is excessively thick, the heat dissipation performance of the cooling member 500 may be deteriorated, and so it is necessary to adjust the thickness to an appropriate value. The cover film 580 can be manufactured to have a thickness of 2 mm or less or 1.5 mm or less, but considering the durability of the cover film 580 and degradation of heat dissipation performance by the cover film 580, it can be preferably manufactured to have a thickness of 0.5 to 1.0 mm. If the thickness of the cover film 580 is less than 0.5 mm, the durability problems may occur. If the thickness of the cover film 580 is greater than 1.0 mm, the heat dissipation performance of the cooling member 500 may be deteriorated.

Since the cover film 580 is arranged in combination with the lower plate 520, coolant water may flow between the upper surface of the cover film 580 and the lower surface of the upper plate 510. Further, even if the cover film 580 is added to the cooling member 500, the inflow and outflow of coolant water through the inlet/outlet port 530 is not restricted by the cover film 580. Thus, the coolant water in the cooling member 500 can be designed to be connected to an external heat exchanger connected with the inlet/outlet port 530 and continuously circulated to maintain its temperature homeostasis.

Meanwhile, when a sealing member 529 or a cover film 580 made from a material having a lower melting point than the lower plate 520 is provided to the cooling member 500, the cooling member 500 may include two materials having different physical properties. Conventionally, the upper plate 510 and the lower plate 520 of the cooling member 500 were mainly joined by brazing or laser welding, and therefore, if the cooling member 500 is designed so as to include two or more materials, one material can be deformed during the welding process, which makes the welding process difficult or impossible. Moreover, when laser welding or the like is used, a local temperature gradient may be formed in the upper plate 510 or the lower plate 520, which cause a problem that at least a part of the upper plate 510 or the lower plate 520 is bent.

Therefore, the cooling member 500 of this embodiment may be produced using a mechanical fastening method in order to minimize this problem. The mechanical fastening method used in the production of this embodiment does not apply heat or applies heat at a temperature lower than the melting point of the material provided to the cooling member 500, thereby minimizing damage to the material forming the cooling member 500.

An example of a mechanical fastening method used for the cooling member 500 may include a rivet or the like, which is a coupling via a fastening member. The cooling member 500 may include a plurality of fastening parts coupled via fastening members such as rivets, and a fastener into which a fastening member can be inserted may be formed on the lower plate 520 or the like. In FIG. 9, positions of fasteners formed on the lower plate 520 or the cover film 580 are illustrated as dots.

Other examples of a mechanical fastening method used for the cooling member 500 may include clinching. Clinching is a deformable joining method in which one surface of two stacked plate-shaped members is pressed using a punch or the like to deform the shape, thereby mechanically joining the two members. Clinching may also be referred to as penetration junction in view of its shape.

When the mechanical fastening method is applied instead of the welding coupling method in the production of the cooling member 500 in this way, excessive heat is not generated during the production process, which can thus minimize unintended deformation of the cooling member 500, thereby reducing the difference between the pre-designed dimensions and the dimensions of the final product, and thus securing dimensional stability. In particular, in the case of aluminum material that has been mainly used for the cooling member 500, it may begin to deform when a temperatures of 660°C or higher, which is the melting point, are applied, but if the above-mentioned mechanical fastening method is applied, heat of the melting point or higher is not applied to the cooling member 500, so that the dimensional stability of the cooling member 500 can be further improved.

In addition, if a mechanical fastening method is applied in the production of the cooling member 500, a specific material vulnerable to temperature may not be deformed during the production process, so that structures of various materials and shapes can be applied to the cooling member 500, and the design of the cooling member 500 may be easy and more diverse.

Meanwhile, when a mechanical fastening method is applied in the production of the cooling member 500, an elastic member 590 may be located between the upper plate 510 and the lower plate 520 to further improve water tightness between the upper plate 510 and the lower plate 520. In the case of applying the conventional welding method, it was difficult to provide the elastic member 590, which is slightly vulnerable to heat, when joining the upper plate 510 and the lower plate 520. Therefore, when the welding process is used, the upper plate 510 and the lower plate 520 are mainly coupled, and then a sealant or the like is applied through an additional process in order to complement the water tightness of the welding surface. However, since the cooling member 500 according to the present embodiment is formed through a mechanical coupling method, it can couple the elastic member 590 vulnerable to heat together during the coupling process of the upper plate 510 and the lower plate 520, thereby achieving the simplification of the production process, the reduction of the production cost, and the like.

The elastic member 590 may include a band-shaped elastic member 592 disposed at an edge of the cooling member 500. The band-shaped elastic member 592 may be provided on a surface where the upper plate 510 and the lower plate 520 contact each other, and can improve the water tightness of the upper plate 510 and the lower plate 520. The band-shaped elastic member 592 is compressed by an external force when the upper plate 510 and the lower plate 520 are coupled, thereby being able to fill a gap between the upper plate 510 and the lower plate 520. The band-shaped elastic member 592 can prevent the cooling water inside the cooling member 500 from flowing out to the outside through the gap. Here, the band-shaped elastic member 592 may be referred to as a water pad.

The elastic member 590 may include a ring-shaped elastic member 594. When the cooling member 500 is formed by a rivet, or the like, a fastener is formed in the fastening part, which causes a problem that the fastening part may reduce the water tightness of the cooling member 500. However, the water tightness of the fastening part can be complemented through the ring-shaped elastic member 594. When the cover film 580 is provided on the cooling member 500, the ring-shaped elastic member 594 may be located on the cover film 580, and the water tightness of the cooling member 500 can be improved by sealing the gap around the fastening part. Here, the ring-shaped elastic member 594 may be referred to as a 'water ring'.

The elastic member 590 can be made from a flexible material having elasticity. An example of a material for producing the elastic member 590 may include a silicone-based foam pad, an acrylic-based foam pad, a urethane-based foam pad, or the like.

Next, a battery pack according to yet another embodiment of the present disclosure will be described.

The battery pack of the embodiment described below is the same as the contents of the embodiments described above, except that the structure of the cooling member included in the battery pack is different. Therefore, in describing the present embodiment, the same reference numerals designate the components common to those of the above-described embodiment, and their detailed descriptions are omitted.

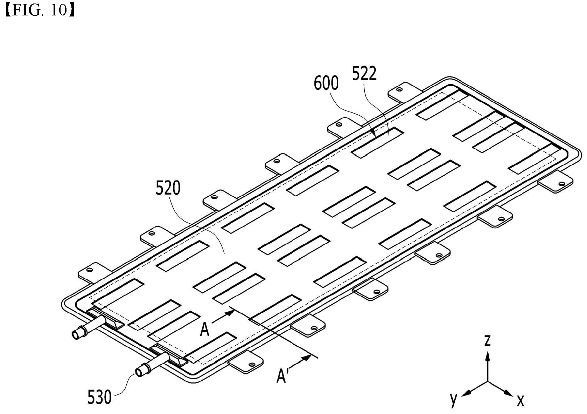

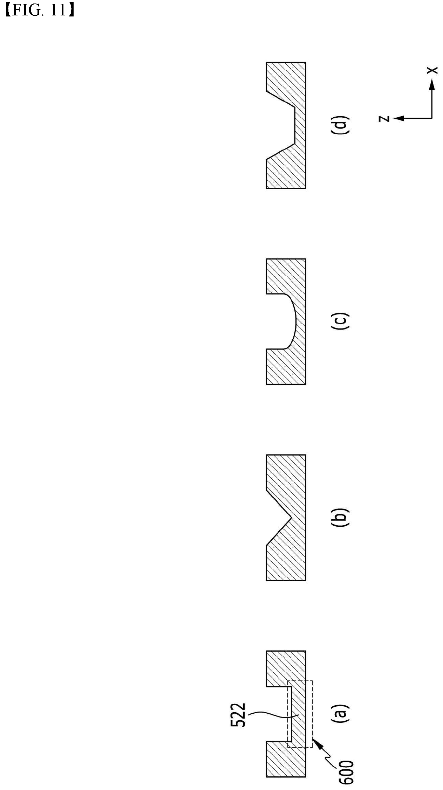

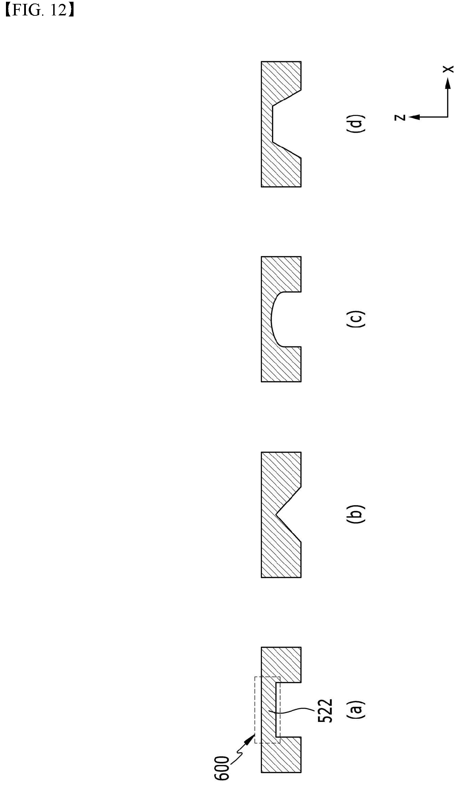

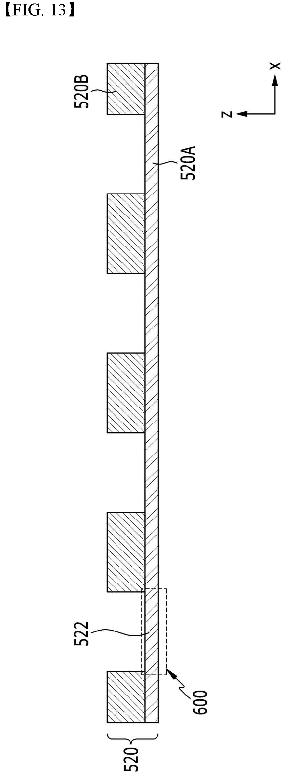

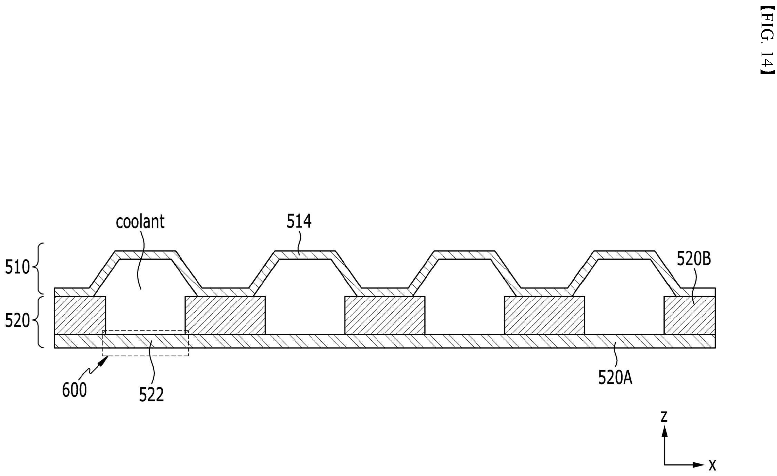

FIG. 10 is a perspective view showing a lower plate of a cooling member included in a battery pack according to another embodiment of the present disclosure. FIG. 11 is a diagram showing examples of the cross section taken along the cutting line A-A of FIG. 10. FIG. 12 is a cross-sectional view of a lower plate for explaining a modified embodiment of the cooling member according to FIG. 10. FIG. 13 is a cross-sectional view of a lower plate for explaining another modified embodiment of the cooling member according to FIG. 10. FIG. 14 is a cross-sectional view of a cooling member for explaining yet another modified embodiment of the cooling member according to FIG. 10.

Referring to FIGS. 10 to 14, the fragile part 600 of the present embodiment may be a portion having a relatively smaller thickness value than other portions of the lower plate 520. Specifically, the lower plate 520 may have a first part referred to as a fragile part 600 and a second part in which the fragile part 600 is not formed, wherein the thickness of the second part may be greater than the thickness of the first part. A thickness value of the first part may be less than or equal to half of a thickness value of the second part. Since the fragile part 600 has a slightly smaller thickness value than other portions, it can be relatively easily pierced by heat or pressure.

Referring to FIG. 10, the lower plate 520 of the cooling member 500 according to the present embodiment may include at least one groove part 522. The groove part 522 may be a portion formed with a small thickness so as to be easily broken by high temperature or high pressure during ignition of the battery cell. Accordingly, in the present embodiment, the fragile part 600 may refer to a portion in which the groove part 522 is formed in the lower part 520, or the groove part 522.

In the embodiments described above, the coolant water is located between the upper plate 510 and the lower plate 520, and makes direct contact with the lower plate 520 in which the fragile part 600 is formed, which causes a problem that the coolant water may leak through a gap around the opening 521. In addition, producing the lower plate 520 so as to include two materials having different physical properties involves a complicated production process, which may increase production time and production costs. However, in the cooling member 500 of the present embodiment, since the sealing member 529 or the cover film 580 having a low melting point is not located on the lower plate 520, and the opening 521 is not formed in the lower plate 520, it is possible to reduce the water tightness and simplify the manufacturing process.

Referring to FIG. 11, the cross section of the groove part 522 may have various shapes. The groove part 522 may have a rectangular cross-sectional shape as shown in FIG. 11(a) by vertically connecting a first part in which the groove part 522 is formed and a second part in which the groove part 522 is not formed. In addition, when an inclination is formed on the connection surface between the first part and the second part described above, a portion of the lower plate 520 may have a triangular cross-sectional shape as shown in FIG. 11(b) or a trapezoidal shape as shown in FIG. 11(d). When the connection surface between the first part and the second part is formed to have a curvature, a portion of the lower plate 520 may have a rounded cross section as shown in FIG. 11(c). Meanwhile, since the cross-sectional shape of the lower plate 520 associated with the formation of the groove part 522 is not limited by the above examples, it can be variously modified in consideration of ease of design.

Considering that the fragile part 600 should be broken by heat or temperature, the fragile part 600 may preferably include as many thin portions as possible, and thus, other shapes of FIG. 11 may be more preferable than the shape of FIG. 11(b). However, since the breaking temperature and pressure may be affected by factors such as thickness, physical properties, shape, etc., a different shape of FIG. 11 may not necessarily be more preferable than the shape of FIG. 11(b).

Referring to FIG. 12, the groove part 522 formed in the lower plate 520 does not face the inside of the cooling member 500 but may be exposed to the outside. At this time, the lower surface of the cooling member 500 may have a locally protruding shape, and the protruding lower surface of the cooling member 500 may be located close to or in contact with the battery cell, thereby promoting heat dissipation of the battery cell. Since the cross-sectional shape shown in FIG. 12 can be described with reference to the contents of FIG. 11, except that the vertical direction is reversed, and its detailed description is omitted.

Meanwhile, the groove part 522 of this embodiment may be formed by various methods.

For example, the groove part 522 may be formed by partially etching the lower plate 520. The groove part 522 may be formed using a notching process.

In another example, the lower plate 520 may be formed by joining two layers, so that the fragile part 600, that is, the groove part 522, can be formed.

Referring to FIG. 13, the lower plate 520 may be formed by joining a first layer 520A provided as a plate-shaped member and a second layer 520B having a plurality of holes. The above-mentioned groove part 522 or the fragile part 600 may be formed by a hole formed in the second layer 520B. For reference, in FIG. 13, except for the first layer 520A, portions shown by oblique lines indicate the second layer 520B, wherein a partially empty space between oblique lines indicates a cross section of a hole formed in the second layer 520B.

A part of the lower plate 520 may include the first layer 520A and the second layer 520B, thereby having a relatively thick thickness, and another part of the lower plate 520 may include only the first layer 520A, thereby having a relatively thin thickness. Here, a portion having the first layer 520A may be referred to as a first part, and a portion having both the first layer 520A and the second layer 520B may be referred to as a second part. Therefore, the thickness of the first part corresponds to the thickness of the first layer 520A, and the thickness of the second part may correspond to the thicknesses of the first layer 520A and the second layer 520B.

Meanwhile, as compared to the case where the fragile part 600 is formed through a notching process or the like, when it is formed through joining of two layers as shown in FIG. 13, the dimensional stability of the fragile part 600 is improved, and process cost and process time due to defective products can be minimized.

Specifically, when the groove part 522 is formed through an etching process, the equipment used for this may be difficult to control to a precise level, and when the thickness of the lower plate 520 is thin, or when the thickness of the desired fragile part 600 is thin, there is a possibility of damaging the lower plate 520 during the process of forming the groove part 522. Specifically, in order for the fragile part 600 to be provided on the lower plate 520, the thickness of a thin film level may have to be formed by removing a portion of the already sufficiently thin lower plate 520. If the control of the equipment is not perfect, the lower plate 520 is broken or the dimensional stability of the fragile part 600 is deteriorated, so that the process costs and process time may become wasteful due to an increase in defective products.

When the lower plate 520 is formed by joining the two layers, the thickness of each layer can be freely adjusted, so that the fragile part 600 can be formed sufficiently thin. The first layer 520A forming the fragile part 600 may be provided with an aluminum material that can melt or break due to temperature, pressure, or sparks during thermal runaway phenomenon. At this time, the thickness of the first layer 520A may be designed so as to be sufficiently thick to a level that can be melted by thermal runaway of the battery cell. Specifically, the first layer 520A may have a thickness of 0.5 mm or less, 0.4 mm or less, 0.3 mm or less, 0.2 mm or less, or 0.1 mm or less.

For example, when both the first layer 520A and the second layer 520B are provided with aluminum, the first layer 520A is provided with an aluminum plate material having a thickness of 0.5 mm or less, 0.4 mm or less, 0.3 mm or less, 0.2 mm or less, or 0.1 mm or less, and the second layer 520B may be provided in a state in which a hole is formed in an aluminum plate material having a thickness of 1.0 to 1.5 mm or more. Further, according to the embodiment, the first layer 520A may be provided thinner, and may be provided with an aluminum plate material having a thickness of, for example, 0.03 to 0.07 mm, 0.04 to 0.06 mm, or 0.05 mm. When the aluminum plate materials of the second layer 520B are joined on one surface of the first layer 520A in this way, a lower plate 520 having a fragile part 600 sufficiently thin in thickness may be formed.

Further, when the lower plate 520 is formed by joining two layers, the thickness values of all the fragile parts 600 may equal to each other. When the first fragile part and the second fragile part are formed in the lower plate 520, the thicknesses of the first fragile part and the second fragile part may be substantially identical to each other. The thickness value of each fragile part 600 may not appear a deviation depending on its position. When a thickness deviation occurs in the fragile part 600 depending on the position, a part thereof may be formed thicker than designed, so that a specific portion may be difficult to break due to heat or pressure. Since all of the fragile parts 600 of this embodiment are formed to have a uniform thickness, errors between the design and the actual product can be minimized.

Various types of joining processes may be applied to the junction of the two layers forming the lower plate 520. Since coolant water is located on the upper surface of the lower plate 520, a coupling between the two layers need to be firmly formed.

In one example, the coupling between the two layers may be formed by a welding process. Examples of the welding process used for the coupling include brazing or laser welding. The two layers can be melt-joined by applying a temperature level similar to the melting point of the material to the two layers. Through the melt junction, the water tightness of the lower plate 520 can be achieved at a desired level.

In another example, the coupling between the two layers may be formed through a rolling process. The rolling process is a method of joining two layers by passing a stacked body in which two or more layers are stacked between a pair of rolls. The stacked body can be heated during the interlayer junction by the rolling process. At this time, if the heating temperature is equal to or higher than the recrystallization temperature of the metal, it may be referred to as hot roll, and if it is equal to or lower than the above temperature, it may be referred to as cold roll. By applying pressure and/or heat to the stacked body, a junction surface between the two layers may be formed widely, which can ensure sufficient water tightness of the lower plate 520.

Meanwhile, when the lower plate 520 is formed through the coupling of two layers, the materials of the two layers may be different, or may be identical or similar to each other. When the materials of the two layers are identical or similar to each other, the melting points of the two layers are identical/similar and thus, the above-mentioned joining process involving heat or pressure can be more easily performed.

Meanwhile, when the two layers are joined through a brazing process, the joining process may not be performed smoothly depending on the physical properties or melting point of the metal. For example, if the two layers are formed from aluminum having a single property, the shape deformation of the aluminum layer may occur during the joining process if the temperature of the brazing process is set to 660°C, which is the melting point of aluminum. In order to prevent such layer deformation, the first layer 520A or the second layer 520B may be made from a clad metal, which is a double layer of metallic material.

For example, the junction of the layers is formed through a brazing process, and the first layer 520A is located below the second layer 520B, so that the cross section of the lower plate 520 can be provided with a structure similar to that of FIG. 11. Here, the first layer 520A may be 3000 series aluminum, and the second layer 520B may be a clad metal including 3000 series and 4000 series aluminum. Since the second layer 520B includes the clad metal, the temperature of the brazing process can be set to 600°C, and thus, shape deformation of aluminum can be prevented during the joining process. At this time, the upper plate 510 may be 3000 series aluminum.

In another example, the junction of the layers is formed through a brazing process, and the first layer 520A is located above the second layer 520B, so that the cross section of the lower plate 520 can be provided with a structure similar to that of FIG. 12. Here, the first layer 520A may include a 3000 series and a 4000 series clad metals, and the second layer 520B may include 3000 series aluminum. At this time, the upper plate 510 may also be 3000 series aluminum, a junction between layers can be smoothly performed through 4000 series aluminum formed on the upper and lower surfaces of the first layer 520A provided with the clad metal. Alternatively, the first layer 520A is provided with 3000 series aluminum, and the second layer 520B or the upper plate 510 may be provided with a 3000 series or 4000 series clad metals.

Meanwhile, referring to FIG. 14, the cooling member 500 can be described as having three layers. Specifically, the upper plate 510 of the cooling member 500 may have one layer, and the lower plate 520 may have two layers. Here, since the lower plate 520 having two layers has been sufficiently described through the contents described above, a detailed description thereof will be omitted.

Since the coolant water in the cooling member 500 is embedded between the upper plate 510 and the lower plate 520, a flow rate deviation of the coolant water may be determined depending on the separation distance between the upper plate 510 and the lower plate 520. The flow rate deviation of the cooling member 500 may depend on the thickness difference of the lower plate 520. Specifically, the periphery of the first part where the fragile part 600 is formed has a relatively large flow rate per unit length, and the periphery of the second part where the fragile part 600 is not formed has a relatively small flow rate per unit length. If the flow rate around the first part is greater, the coolant water can be injected more quickly according to the hydraulic pressure when the fragile part 600 is opened, so that the larger flow rate around the first part, the more preferable.

Therefore, in this embodiment, the upper plate 510 having a bent part 514 may be provided so that the flow rate deviation of the coolant water in the cooling member 500 is formed. The bent part 514 may have a wavy cross section shape based on a cross section of the cooling member 500 in the longitudinal direction. Here, based on the cross section, the highest point of the bent part 514, that is, a crest, may correspond to the first part of the lower plate 520 where the fragile part 600 is formed. Further, the lowest point of the bent part 514, that is, a trough, may correspond to the second part of the lower plate 520. Since the crest of the bent part 514 corresponds to the first part, the flow rate per unit length around the first part can be increased, and when the fragile part 600 is opened, the coolant water of the cooling member 500 can be injected more quickly toward the first battery cell 110A in which the ignition phenomenon occurs.

Meanwhile, in FIG. 14, each layer of the cooling member 500 is shown as being located in the order of the first layer 520A, the second layer 520B, and the upper plate 510, but it can also be located in the order of the second layer 520B, the first layer 520A and the upper plate 510. In this case, since the second layer 520B forming the lower surface of the cooling member 500 may be located close to or in contact with the battery cell, the effect of promoting the heat dissipation of the battery cell by the second layer 520B can appear.

Further, in the cooling member 500 as shown in FIG. 14, the upper plate 510 may be referred to as a third layer and may be made of aluminum. If the third layer is formed of aluminum, the upper plate 510 may be preferably formed to have a thickness of 1.0 to 2.0 mm, 1.3 to 1.7 mm, or 1.5 mm. Further, the second layer 520B included in the lower plate 520 may be preferably formed to have a thickness of 1.0 to 1.5 mm, 1.2 to 1.4 mm, or 1.3 mm. The first layer 520A may have a thickness of 0.5 mm or less, 0.4 mm or less, 0.3 mm or less, 0.2 mm or less, or 0.1 mm or less. Further, the first layer 520A may be formed thin enough to have the properties of the fragile part 600, and specifically, it may have a thickness of 0.03 to 0.07 mm, or 0.04 to 0.06 mm.

Various types of joining processes such as a welding process and a rolling process can be applied to the coupling between layers in the cooling member 500 having three layers. In the cooling member 500 including three layers, when the junction of the layers is formed through brazing, physical properties of the first layer 520A, the second layer 520B, and the third layer, which is the upper plate 510, may be described through the above description, and thus, a detailed description thereof will be omitted.

Next, a battery pack according to yet another embodiment of the present disclosure will be described.

The battery pack of the embodiment described below is the same as the contents of the embodiments described above, except that the structure of the cooling member included in the battery pack is different. Therefore, in describing the present embodiment, the same reference numerals designate the components common to those of the above-described embodiment, and thus their detailed descriptions are omitted.

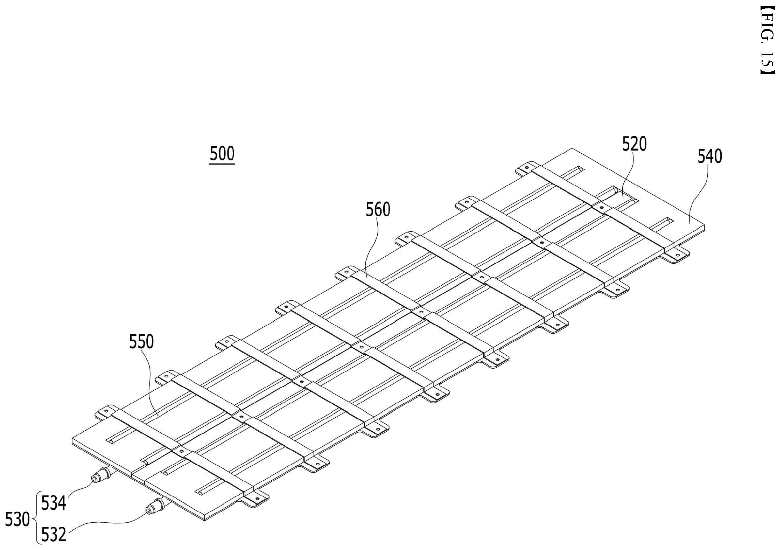

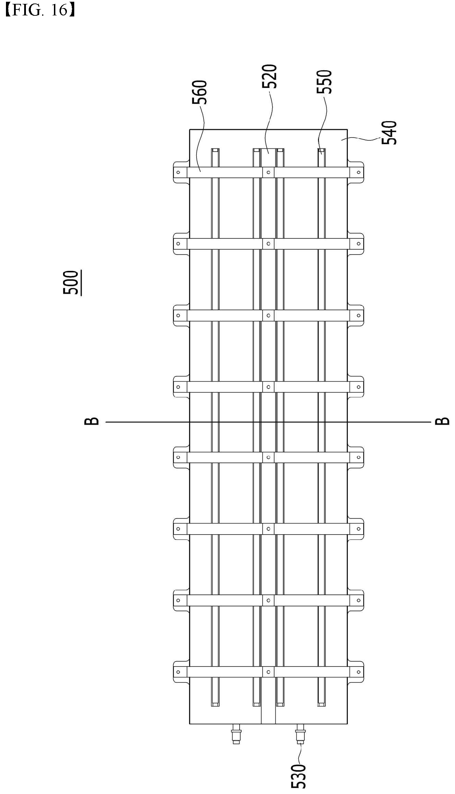

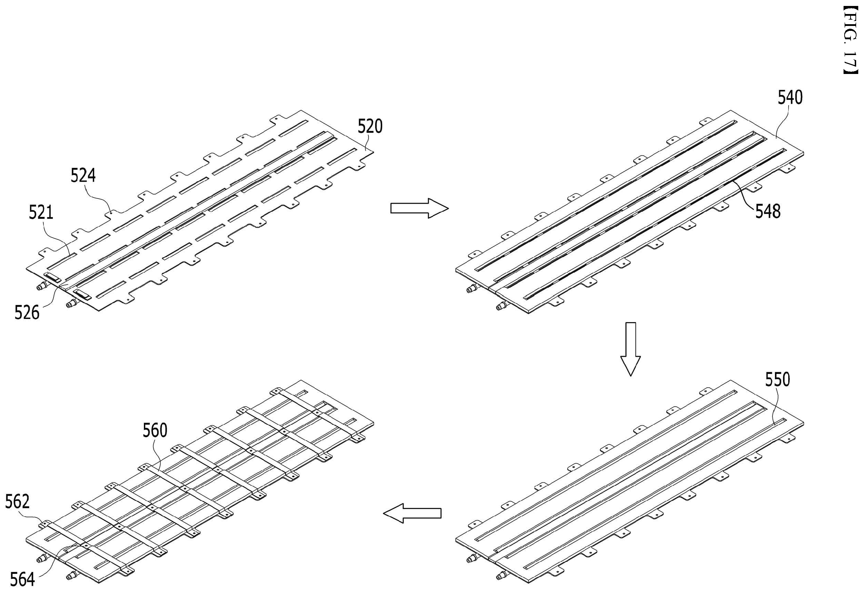

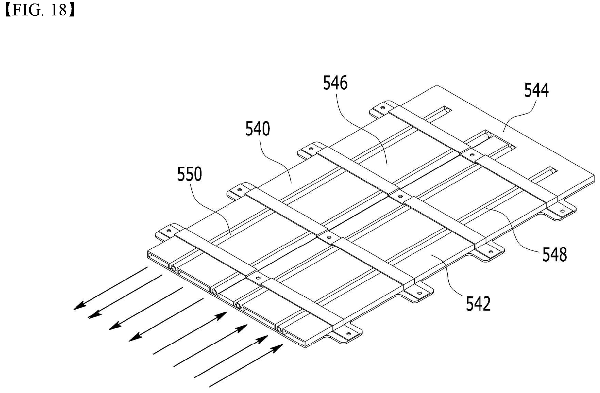

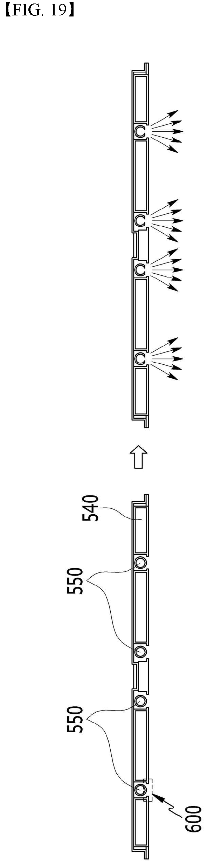

FIG. 15 is a perspective view showing a cooling member included in a battery pack according to yet another embodiment of the present disclosure. FIG. 16 is a top view of the cooling member included in a battery pack according to yet another embodiment of the present disclosure. FIG. 17 is a diagram showing the coupling of the lower plate, the cooling tube, and the cooling hose included in the cooling member according to FIG. 15. FIG. 18 shows the cooling member according to FIG. 16 cut along the line B-B, and shows the inflow of coolant water into the cooling tube and the cooling hose, and the outflow therefrom. FIG. 19 is a cross-sectional view of the cooling member of FIG. 16 taken along line B-B, which shows the injection of coolant water by a cooling hose during ignition of a battery cell.

Referring to FIGS. 15 to 17, the cooling member 500 of this embodiment may include a cooling tube 540 and a cooling hose 550 through which coolant water flows. The lower plate 520 may be preferably provided in a plate shape to support the cooling tube 540 or the like. The upper plate 510 may be omitted by replacing it with a cooling tube 540 or the like. The cooling member 500 can be manufactured by mounting the cooling tube 540 on the upper surface of the lower plate 520, mounting the cooling hose 550 on the cooling tube 540, and then coupling the fixing member 560 with the lower plate 520.

In the embodiments described above, since the coolant water is located between the upper plate 510 and the lower plate 520 and makes direct contact with the lower plate 520 on which the fragile part 600 is formed, there may be a problem that the coolant water leaks through the gap around the opening 521. Further, manufacturing the lower plate 520 so as to include two materials having different physical properties involves a complicated manufacturing process, which may increase the production time and production costs. However, in the cooling member 500 of the present embodiment, since the coolant water is isolated from the cooling tube 540 or the cooling hose 550, thereby minimizing the deterioration of the water tightness caused by the opening 521. Further, by coupling the lower plate 520, the cooling tube 540, and the cooling hose 550 through the fixing member 560, the production process of the cooling member 500 is simplified, and the production time and costs can be reduced..

Referring to FIG. 17, the lower plate 520 may include at least one opening 521. The opening 521 may be for injecting internal coolant water into the battery cell by heat or pressure generated by ignition during internal ignition of the battery cell. A protrusion part 524 extending from one side of the lower plate 520 and continuously located along one corner of the lower plate 520 may be formed around the lower plate 520. The protrusion part 524 is arranged in contact with or in close proximity to the electrode leads of each battery cell stack or busbars connected to the electrode leads, thereby promoting heat dissipation from that portion. Further, a berm 526 may be formed on the lower plate 520. The berm 526 may extend along the longitudinal direction of the cooling member 500 from the center in the width direction of the cooling member 500 except for a predetermined section. The berm 526 allows the cooling tube 540 to be fixed in position and the fixing member 560 to be stably fixed. Here, the width direction of the cooling member 500 may be a direction parallel to the short side of the cooling member 500. A longitudinal direction of the cooling member 500 may be a direction parallel to a long side of the cooling member 500.

Referring to FIGS. 17 and 18, the cooling tube 540 may provide a coolant water flow path for dissipating heat from the battery cells. Coolant water injected through the inlet port 532 may be housed inside the cooling tube 540, and coolant water housed in the cooling tube 540 may be discharged through the outlet port 534. As coolant water flows in or out of the cooling tube 540, the cooling member 500 may be maintained at a relatively constant temperature. The coolant water in the cooling tube 540 can be designed to be connected to an external heat exchanger connected with the inlet/outlet port 530 and continuously circulated to maintain its temperature homeostasis.

The lower plate 520 cooled by the cooling tube 540 may promote heat dissipation of the battery cells. The cooling tube 540 may be made from a material having high thermal conductivity, and thereby, which can quickly absorb the heat of the lower plate 520. The cooling tube 540 may be made from a material having sufficient rigidity to withstand the pressure and weight of the coolant water contained therein. The cooling tube 540 may be made from the same material as that of the lower plate 520 or a material similar thereto. Examples of materials of the cooling tube 540 may include aluminum, gold, silver, copper, platinum, alloys containing the same, or the like.

The cooling tube 540 may be mounted at a position where the berm 526 is not formed in the lower plate 520. The outline shape of the cooling tube 540 may be similar to that of the lower plate 520 except for the protrusion part 524.

The cooling tube 540 may have a square tubular shape, and may be branched into two parts each corresponding to the inlet port 532 and the outlet port 534 in consideration of the position of the berm 526. Thereby, the cooling tube 540 may form a U-shaped flow path. The cooling tube 540 may include a first part 542 extending from the inlet port 532 along a straight line parallel to the longitudinal direction of the cooling member 500, a second part 544 extending along a curve rotating clockwise or counterclockwise from the end of the first part 542, and a third part 546 extending from an end of the second part 544 toward the outlet port 534 along a straight line parallel to the longitudinal direction of the cooling member 500.

The cooling tube 540 may include a housing part 548 to which the cooling hose 550 is mounted. The housing part 548 may mean a housing space in which the cooling hose 550 is mounted in the cooling tube 540. The housing part 548 may be a long groove extending along the length direction of the cooling member 500, and the cross section of the housing part 548 may be a polygon such as a square or a circle. Both ends of the cooling hose 550 in the longitudinal direction may be connected to both ends of the housing part 548 in the longitudinal direction. Both ends of the cooling hose 550 may be inserted into both ends of the housing part 548 in the longitudinal direction. Connection portions between both ends of the housing part 548 in the longitudinal direction and both ends of the cooling hose 550 may be sealed to ensure water tightness. For example, a gasket is provided at a connection portion between the cooling hose 550 and the housing part 548, and water tightness between the two members can be secured through the gasket. In another example, extension part extending in a circumferential direction from the ends of the cooling hose 550 may be formed at both ends of the cooling hose 550, and the extension part is inserted into the end of the housing part 548 and located inside the cooling tube 540, thereby supplementing a coupling between the cooling hose 550 and the cooling tube 540. In yet another example, a first extension part extending in a circumferential direction and a second extension part spaced apart from the first extension part may be formed at the end of the cooling hose 550. The first extension part is located inside the cooling tube 540, and the second extension part may be located outside the cooling tube 540. As the two extension parts come into close contact with the cooling tube 540, the coupling between the cooling hose 550 and the cooling tube 540 may be further complemented. Further, at this time, a protrusion part may be formed on the extension part, the first extension part, or the second extension part, and the cooling hose 550 may be more closely coupled to one side of the cooling tube 540 through the protrusion part.

The cooling hose 550 may be connected to the cooling tube 540 to provide a flow path for coolant water that performs heat dissipation of the battery cells. Coolant water flowing in from the inlet/outlet port 530 may move to the cooling hose 550. The cooling hose 550 may be receive supply of coolant water from a cooling tube 540 located close to the inlet/outlet port 530.

The fixing member 560 may serve to complement stiffness of the cooling member 500 by fixing the lower plate 520, the cooling tube 540 and the cooling hose 550. The fixing member 560 may fix the position of the cooling tube 540 and the cooling hose 550 through coupling with the lower plate 520.

The fixing member 560 may be provided in the shape of a strap having a length. The fixing member 560 may be located in parallel to the width direction of the cooling member 500. A plurality of fixing members 560 may be provided along the longitudinal direction of the cooling member 500, and the plurality of fixing members 560 may be arranged at even intervals.

The fixing member 560 may be made from a material with high stiffness to maintain the shape of the cooling member 500, and may be made from metal as an example.

The fixing member 560 may be coupled to both ends of the cooling member 500 in the width direction. The fixing member 560 may be coupled to the center of the cooling member 500 in the width direction. The fixing member 560 may include end coupling parts 562 each formed at both ends of the fixing member 560 in the longitudinal direction, and a central coupling part 564 formed in the center of the fixing member 560 in the longitudinal direction. The end coupling parts 562 of the fixing member 560 may be coupled with the protrusion parts 524 located at both ends of the lower plate 520 in the width direction. The central coupling part 564 of the fixing member 560 may be coupled to the berm 526 located at the center of the lower plate 520 in the width direction. The end coupling part 562 and the central coupling part 564 may be formed to have a step with other parts of the fixing member 560 and may have a height slightly lower than other parts of the fixing member 560. Considering the shape of the protrusion part 524 and the berm 526, the end coupling part 562 may be formed to have a greater step than the central coupling part 564.

In the case of using the fixing member 560 during the production of the cooling member 500 in this way, excessive heat is not generated during the manufacturing process as compared to joining methods by the welding process, whereby certain materials that are vulnerable to temperature may not deform during the production process. Therefore, by using the fixing member 560, the cooling member 500 can be manufactured to include two or more materials having different properties, structures of various materials and shapes like the cooling hose 550 can be applied to the cooling member 500, and the design of the cooling member 500 may be easier and more diverse.

Referring to FIG. 19, the cooling hose 550 may be located so as to correspond to the opening 521 of the lower plate 520. The cooling hose 550 is melted or broken when an internal fire occurs, so that internal coolant water can be injected toward the battery cell. When the battery cell ignites, a part of the cooling hose 550 corresponding to the opening 521 is opened by melting or breaking. Thereby, the cooling water is sprayed, ejected and injected in the direction of gravity, so that the fire in the battery cells located below the cooling member 500 can be extinguished. Meanwhile, in order to achieve this effect, the housing part 548 in which the cooling hose 550 is mounted may also be formed to correspond to the opening 521 of the lower plate 520.

Considering the structure of the present embodiment, the fragile part 600 of this embodiment may refer to a portion where the opening 521 is located in the lower plate 520. The fragile part 600 may refer to a portion where the opening 521 closed by the cooling hose 550 is formed in the lower plate 520.

The cooling hose 550 may be made from a material that melts or breaks at a predetermined temperature or pressure. The cooling hose 550 may be made from the same or similar material as the sealing member 529 of the embodiments described above.

Meanwhile, in order to realize the above effects, a configuration is also possible in which a part of the cooling tube 540 is broken and the cooling water is injected without separately producing the cooling hose 550. However, in order for the cooling tube 540 to withstand the pressure of the cooling water flowing into the inside and to maintain its shape, the cooling tube 540 must be made of a material having sufficient stiffness. Thus, manufacturing from a material that is easily melted by heat or broken by pressure, there is a problem that the overall durability of the cooling member 500 may be reduced. Therefore, it may be desirable to configure the cooling hose 550, which can be easily broken by heat, separately from the cooling tube 540, as in the present embodiment, in order to improve the performance of the cooling member 500 as a whole.

Meanwhile, the battery pack according to the embodiments of the present disclosure may further include a battery management system (BMS) and/or a cooling device that control and manage battery's temperature, voltage, etc.

The battery pack according to an embodiment of the present disclosure can be applied to various devices. The device to which the battery pack is applied may be a vehicle means such as an electric bicycle, an electric vehicle, or a hybrid vehicle. However, the above-mentioned device is not limited thereto, and the battery pack according to the present embodiment can be used for various devices in addition to the above illustrations, which also falls within the scope of the present disclosure.

Although the invention has been described in detail above with reference to preferred embodiments thereof, the scope of the present disclosure is not limited thereto, and various modifications and improvements can be made by those skilled in the art using the basic concepts of the present disclosure which are defined in the appended claims, which also fall within the scope of the present disclosure.

### [Description of Reference Numerals]

1000: battery pack
100: cell block
110: battery cell
120: battery cell stack
130: side face plate
140: holding strap
150: busbar frame
200: pack frame
300: resin layer
400: end plate
500: cooling member
510: upper plate
520: lower plate
530: inlet/outlet port
540: cooling tube
550: cooling hose
560: fixed member
580: cover film
590: elastic member
600: fragile part
700: foam pad
Preferred embodiments of the Invention are specified in the following items:

### [Item 1]

A battery pack comprising:
a battery cell stack in which a plurality of battery cells are stacked,
a pack frame that houses the battery cell stack,
a cooling member that is located on an upper side of the battery cell stack and contains a coolant water, and
a foam pad that is located between the battery cell stack and the cooling member,
wherein at least one fragile part that breaks or melts at a predetermined temperature or pressure or higher is formed on a lower plate of the cooling member, and
wherein the fragile part of the cooling member is opened, so that the moving path of the coolant water discharged toward the battery cell stack is guided by the foam pad.

### [Item 2]

The battery pack of Item 1, wherein:
the foam pad comprises at least one opening, and the opening of the foam pad corresponds to the fragile part.

### [Item 3]

The battery pack of Item 1, wherein:
a part of the coolant water discharged toward the battery cell stack is absorbed by the foam pad.

### [Item 4]

The battery pack of Item 1, wherein:
the battery cell stack is formed in a plurality of numbers, and
the foam pads correspond to all of the battery cell stacks.

### [Item 5]

The battery pack of Item 1, wherein:
a plurality of openings are formed in the lower plate, with the opening being closed by a sealing member, and
the fragile part is a portion where the opening closed by the sealing member in the lower plate is located.

### [Item 6]

The battery pack of Item 1, wherein:
the cooling member comprises a cooling tube that provides a flow path for coolant water and a cooling hose attached to the cooling tube,
the lower plate is formed with a plurality of openings, with the cooling hose being located so as to correspond to the opening, and
the fragile part is a portion where the opening closed by the cooling hose in the lower plate is located.

### [Item 7]

The battery pack of Item 6, wherein:
the lower plate and the cooling tube are connected by a strap-shaped fixing member.

### [Item 8]

The battery pack of Item 1, wherein:
the lower plate comprises a first part where the fragile part is formed and a second part where the fragile part is not formed, and
a thickness value of the first part is smaller than a thickness value of the second part.

### [Item 9]

The battery pack of Item 8, wherein:
the thickness value of the first part is less than or equal to half of the thickness value of the second part.

### [Item 10]

The battery pack of Item 8, wherein:
the lower plate is formed by joining a first layer and a second layer having different thicknesses from each other,
the thickness of the first part corresponds to the thickness of the first layer, and
the thickness of the second part corresponds to the thickness of the first layer and the second layer.

### [Item 11]

The battery pack of Item 8, wherein:
the upper plate coupled to the lower plate of the cooling member comprises a bent part,
a crest of the bent part corresponds to the first part, and
a trough of the bent part corresponds to the second part.

### [Item 12]

The battery pack of Item 1, wherein:
the cooling member further comprises an in-out port for injecting coolant water into an inner space of the cooling member,
the in-out port is connected to an external heat exchanger, and
the coolant water of the cooling member circulates through the in-out port.

### [Item 13]

The battery pack of Item 1, wherein:
the upper plate of the cooling member is integrated with the pack frame.

### [Item 14]

A device comprising the battery pack as set forth in Item 1.

## Claims

1. A battery pack (1000) comprising:
a battery cell stack (120) in which a plurality of battery cells (110) are stacked,
a pack frame (200) that houses the battery cell stack (120),
a cooling member (500) that is located on an upper side of the battery cell stack (120) and contains a coolant water, and
a foam pad (700) that is located between the battery cell stack (120) and the cooling member (500),
wherein at least one fragile part (600) that breaks or melts at a predetermined temperature or pressure or higher is formed on a lower plate (520) of the cooling member (500),
wherein the fragile part (600) of the cooling member (500) is opened, so that the moving path of the coolant water discharged toward the battery cell stack (120) is guided by the foam pad (700), and
wherein the lower plate (520) is formed by joining a first layer (520A) and a second layer (520B).

2. The battery pack of claim 1, wherein:
the foam pad (700) comprises at least one opening (521), and the opening of the foam pad corresponds to the fragile part (600).

3. The battery pack of claim 1, wherein:
a part of the coolant water discharged toward the battery cell stack (120) is absorbed by the foam pad (700).

4. The battery pack of claim 1, wherein:
the battery cell stack (120) is formed in a plurality of numbers, and
the foam pads (700) correspond to all of the battery cell stacks (120).

5. The battery pack of claim 1, wherein:
a plurality of openings (521) are formed in the lower plate (520), with the opening being closed by a sealing member (529), and
the fragile part (600) is a portion where the opening (521) closed by the sealing member (529) in the lower plate is located.

6. The battery pack of claim 1, wherein:
the cooling member (500) comprises a cooling tube (540) that provides a flow path for coolant water and a cooling hose (550) attached to the cooling tube (540),
the lower plate (520) is formed with a plurality of openings (521), with the cooling hose (550) being located so as to correspond to the opening, and
the fragile part (600) is a portion where the opening (521) closed by the cooling hose (550) in the lower plate is located.

7. The battery pack of claim 6, wherein:
the lower plate (520) and the cooling tube (540) are connected by a strap-shaped fixing member (560).

8. The battery pack of claim 1, wherein:
the lower plate (520) comprises a first part where the fragile part (600) is formed and a second part where the fragile part is not formed, and
a thickness value of the first part is smaller than a thickness value of the second part.

9. The battery pack of claim 8, wherein:
the thickness value of the first part is less than or equal to half of the thickness value of the second part.

10. The battery pack of claim 8, wherein:
the first layer (520A) and the second layer (520B) have different thicknesses from each other,
the thickness of the first part corresponds to the thickness of the first layer (520A), and
the thickness of the second part corresponds to the thickness of the first layer (520A) and the second layer (520B).

11. The battery pack of claim 8, wherein:
the upper plate (510) coupled to the lower plate (520) of the cooling member (500) comprises a bent part (514),
a crest of the bent part corresponds to the first part, and
a trough of the bent part corresponds to the second part.

12. The battery pack of claim 1, wherein:
the cooling member (500) further comprises an in-out port (530) for injecting coolant water into an inner space of the cooling member,
the in-out port (530) is connected to an external heat exchanger, and
the coolant water of the cooling member (500) circulates through the in-out port (530).

13. The battery pack of claim 1, wherein:
the upper plate (510) of the cooling member (500) is integrated with the pack frame (200).

14. A device comprising the battery pack as set forth in claim 1.
